# EUROPÄISCHE PATENTSCHRIFT

(11) **EP 1 157 949 B1**
(45) Veröffentlichungstag und Bekanntmachung des Hinweises auf die Patenterteilung: **18.08.2004**
(21) Anmeldenummer: 01250177.1
(22) Anmeldetag: 18.05.2001
(51) Int. Cl.: B65G 13/08, B65G 13/07

(54) **Rollenbahnkurve in einem Palettenförderer**
Roller-curved path for a pallet conveyor
Tronc on courbe à rouleaux d'un transporteur pour palettes

(30) Priorität: 25.05.2000 DE 10027431
(43) Veröffentlichungstag der Anmeldung: 28.11.2001
(73) Patentinhaber: Siemens Aktiengesellschaft, 80333 München (DE)
(72) Erfinder: Hennig, Hagen, 63456 Hanau (DE); Kandziora, Johann, 61440 Oberursel (DE); Schaum, Frank-Peter, 63533 Mainhausen (DE)

(56) Entgegenhaltungen:
- EP-A- 0 025 464
- WO-A-00/40485
- GB-A- 2 335 638

## Beschreibung

Die Erfindung betrifft eine Rollenbahnkurve in einem Palettenförderer mit im Abstand voneinander verlaufenden Seitenwangen und zwischen diesen in Förderrichtung aufeinanderfolgend angeordneten, beidendig in den Seitenwangen gelagerten und über Zugmittel endlos antriebsmäßig verbundenen konischen Rollen, deren Achsen den Radienmittelpunkt der Rollenbahnkurve schneiden und die derartig geneigt eingebaut sind, dass ihre nach oben gerichteten Rollenmantellinien eine gemeinsame Tragebene für die Palette bilden (GB-A-2 335 638).

Es sind unterschiedliche Antriebsmittel für Rollenbahnen oder Rollenbahnabschnitte zum Transportieren von Gegenständen, insbesondere Paletten bekannt, beispielsweise solche, bei denen die Transportrollen mit endlosen Zahnriemenbändem oder Ketten im Eingriff stehen, welche um zwei an den Enden der Rollenbahn oder des Rollenbahnabschnittes angeordnete Umlenkräder geführt sind, die wiederum von mindestens einem elektrischen Antriebsmotor getrieben werden. Problematisch wird das Fördern von Paletten insbesondere dann, wenn der Förderer einen Seitenbogen ausführt, weil eine im Bogen geführte Kette mit der sich ständig ändernden Zugrichtung von Kettenglied zu Kettenglied bestrebt ist, sich zur Innenseite des Kettenbogens hin zu verschieben. Aus diesem Grund sind seitliche Führungen im Kettenbogenbereich erforderlich.

Man hat versucht, auf Kettenantriebe im Seitenbogenbereich des Förderers zu verzichten und statt dessen relativ große Drehteller eingesetzt, die dann die Funktion der Seitenbogenkette übernahmen. Abgesehen davon, dass diese Drehteller und deren Lagerung für den Einsatz von Paletten häufig unverhältnismäßig aufwendig sind, verbleibt auch das Problem der Abstützung der Seitenbogenkette im Bereich des rücklaufenden Unterzuges, da der nicht stirnseitig am Drehteller abgestützt werden kann.

Aus der DE 34 32 042 A1 ist ein Förderersystem bekannt, bei dem der Transport von Werkstückträgem auch im Kurvenbereich möglich ist. Dazu wird eine Seitenbogenkette verwendet, bei der die einzelnen Laschen der Kette über besonders ausgebildete Bolzen untereinander verbunden sind, die so konfiguriert sind, dass neben der Übertragung der Zugkräfte auch die Umlenkung über Umlenkräder und deren Beweglichkeit quer zur Längserstreckung möglich ist. Allerdings sind derartige Ketten nur begrenzt verwendbar; bei Förderleistungen von über 200 Paletten/Stunde und Umlenkung der Paletten um etwa 90° sind diese Konstruktionen nicht einsetzbar.

Aufgabe der vorliegenden Erfindung ist es, eine Rollenbahnkurve in einem Palettenbahnförderer hinsichtlich ihres Antriebes des Rollen so zu gestalten, dass mit hoher Leistung und geringer Geräuschentwicklung auch mehr als 1000 kg schwere Holzpaletten bei relativ langsamen Fördergeschwindigkeiten von ca. 0,3 m/s bewegt werden können.

Die Lösung der erfindungsgemäßen Aufgabe wird durch eine Rollen bahn kurve nach Anspruch 1 erreicht,

Derartige Lamellenkeilriemen sind an sich bekannt und auf dem Markt beispielsweise als Super-T-Link-Riemen verfügbar. Sie bestehen aus einzelnen Verbindungsgliedern, deren entsprechend ausgebildete Enden in angepasste Öffnungen am jeweils anderen Ende eines jeden Verbindungsgliedes eingesteckt und durch Verdrehen so verhakt werden, dass eine im Betrieb unlösbare Verbindung zu einem endlosen Keilriemen herstellbar ist. Die Keilriemen werden im vorgespannten Zustand montiert, eine separate Spannvorrichtung ist nicht erforderlich.

Die Lamellenkeilriemen sind äußerst verschleißfest und kennen praktisch keine Alterung des gewöhnlich aus Polyester-Polyuhrethan hergestellten Materials. Darüber hinaus sind die verwendeten Lamellenkeilriemen reparabel; denn durch Austausch einzelner Verbindungsglieder können beschädigte Teile ausgewechselt werden. Durch Zusammenfügen der Verbindungselemente lassen sich beliebig lange Keilriemen herstellen, so dass die Lagerhaltung von Ersatzriemen vereinfacht wird.

Der besondere Vorteil der Lamellenkeilriemen, den sich die vorliegende Erfindung zu eigen macht, ist eine bedingte Kurvengängigkeit, die sich aus der besonderen vorstehend beschriebenen Verbindungstechnik ergibt. Der Riemen weist einen Lamellenaufbau auf, der sich flexibel anpasst und verschleißarm um die Riemenscheiben umläuft. Hinzu kommt, dass diese Art Antriebsriemen sehr geringe Schwingungsamplituden aufweisen und daher ein äußerst ruhiges Ablaufverhalten zeigen.

In einem Palettenförderer der vorstehend beschriebenen Art lassen sich die Lamellenkeilriemen besonders günstig zum Antrieb der konischen Rollen einsetzen. Bedingt durch die konische Form der Rollen und den geneigten Einbau dieser Rollen im Traggerüst bzw. zwischen den Wangen des Förderers fluchten auch die konzentrisch zur Rollendrehachse angeordneten Riemenscheiben nicht miteinander. Vielmehr sind die Riemenscheiben in hintereinander geneigten Ebenen angeordnet, so dass ein normaler Keilriemenantrieb hier nicht einsetzbar ist.

Es hat sich gezeigt, dass die Lamellenkeilriemen bedingt durch ihre besonderen Laufeigenschaften durchaus geeignet sind, mindestens zwei benachbarte Rollen einer Rollenbahnkurve anzutreiben, wenn der bekannte Lamellenkeilriemen um die Riemenscheiben dieser beiden benachbarten Rollen geschlungen wird. Auch hier macht sich der besondere Vorteil bemerkbar, dass der Lamellenkeilriemen geringen Verschleiß aufweist und vor allem extrem laufruhig abläuft. Dadurch, dass jeweils ein kurvengängiger Lamellenkeilriemen die konzentrisch auf jeder Rolle angeordneten Riemenscheiben zweier benachbarter konischer Rollen unmittelbar verbindet, entfallen Leitführungen, wie sie bei den bekannten Seitenbogenketten unabdingbar sind.

Es hat sich als günstig erwiesen, wenn die Riemenscheiben jeweils an den der äußeren Wange zugewandten Rollenenden angeordnet sind, weil dort baubedingt ein größerer Abstand zwischen den Riemenscheiben zu verwirklichen ist, als dies an der Innenkurve des Förderers möglich wäre.

Zum Antrieb der Rollenbahnkurve ist mindestens eine der Riemenscheiben einer konischen Rolle mit dem Antriebsmotor verbunden, dessen Antriebsmoment über die erfindungsgemäß untereinander verbundenen Rollen weitergeleitet wird.

Vorzugsweise ist die mittlere oder sind die mittleren Rollen der Rollenbahnkurve mit dem Antriebsmotor verbunden und verzweigen ihr Antriebsmoment nach beiden Seiten der Rollenbahnkurve.

Ein Ausführungsbeispiel der Erfindung ist in der Zeichnung dargestellt und wird nachfolgend beschrieben. Es zeigt:
- Figur 1: die Rollenbahnkurve eines erfindungsgemäßen Palettenförderers in der Draufsicht,
- Figur 2: einen Querschnitt durch die Rollenbahnkurve nach Figur 1 im Bereich des Antriebsmotors, und
- Figur 3: einen typischen Lamellenkeilriemen zum Antrieb der Rollenbahnkurve.

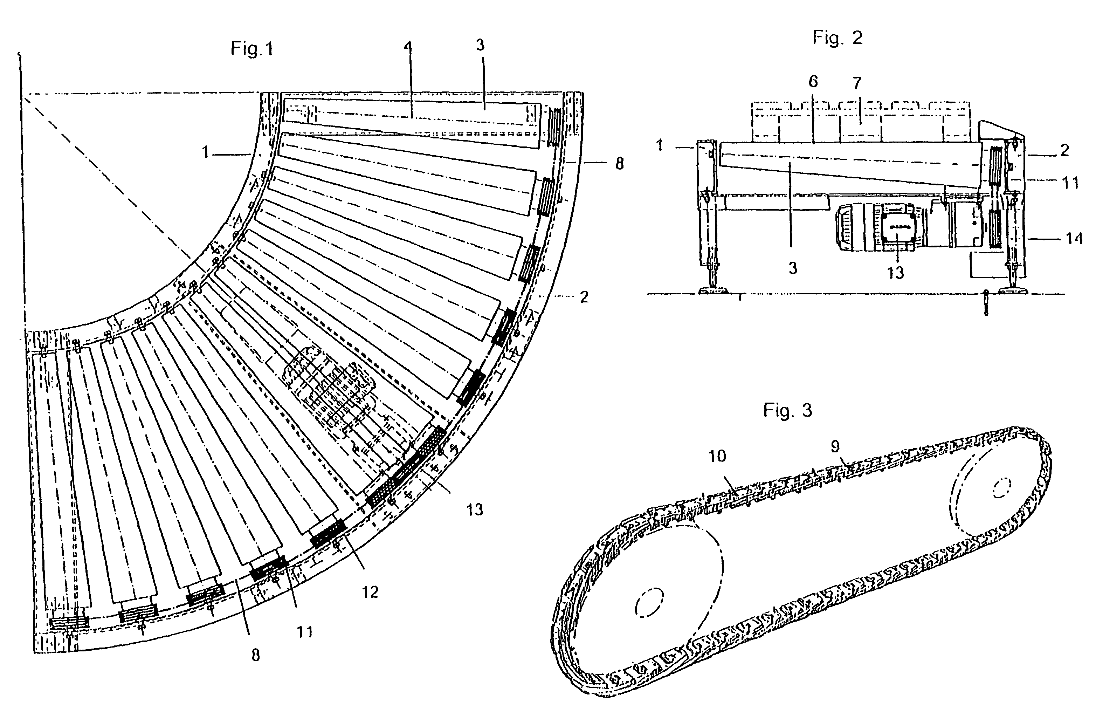

In Figur 1 ist in einer Draufsicht eine Rollenbahnkurve R dargestellt, wie sie in Paletten- Transportsystemen eingesetzt wird. Die Rollenbahnkurve ist mit einer 90°-Umführung ausgelegt und besteht aus den mit Abstand voneinander verlaufenden Seitenwangen 1 und 2, zwischen denen die mit ihren Enden in den Seitenwangen 1 und 2 gelagerten konischen Rollen 3 aufeinanderfolgend angeordnet sind. Dabei sind die konischen Rollen 3 so angeordnet, dass die Verlängerung ihrer Längsachsen 4 sich in dem Radienmittelpunkt 5 der Rollenbahnkurve R schneiden, d.h. der kleinere Durchmesser der konischen Rolle 3 ist an der Kurveninnenseite (Seitenwange 1) gelagert. Darüber hinaus sind die Rollen 3, wie in Figur 2 ersichtlich, derartig geneigt in den Seitenwangen 1 und 2 eingebaut, dass die nach oben gerichtete Mantellinie 6 jeder konischen Rolle 3 eine Horizontale bildet und die Mantellinien 6 der nebeneinander angeordneten konischen Rollen 3 eine gemeinsame horizontale Tragebene für die aufliegende Palette 7 bilden. Durch die Konizität und die sich daraus ergebenden unterschiedlichen Umfangsgeschwindigkeiten der konischen Rollen 3 werden die aufliegenden Paletten 7 sukzessive in die Förderrichtung gedreht, so dass die einlaufende Palette 7 am Auslauf der Rollenbahnkurve R um 90° in der Horizontalebene gedreht ist.

Die Erfindung betrifft den Antrieb der Rollenbahnkurve R, der sich bisher aufwendig und kompliziert gestaltete. Die bisher Verwendung findenden Seitenbogenketten waren sehr verschleißintensiv und darüber hinaus laut; die Förderleistung war stark beschränkt.

Erfindungsgemäß wird ein an sich bekannter Lamellenkeilriemen 8 zum Antrieb der Rollenbahnkurve R vorgesehen, wie er in Figur 3 schematisch dargestellt ist. Der Lamellenkeilriemen 8 besteht aus einer Vielzahl zu einem endlosen Riemen zusammengefügter Verbindungsglieder 9, die in der Regel aus einem hochleistungsfähigen verschleißfesten Polyuhrethan und Polyester-Verbundmaterial bestehen. Die einzelnen Verbindungsglieder 9 werden miteinander verhakt, wobei beispielsweise nietenartige Verbindungsglieder 10 mit T-förmigem Kopf zum Einsatz kommen, die durch eine entsprechende Öffnung der Verbindungsglieder hindurchgesteckt und durch Verdrehen verhakt werden. Die Lamellenkeilriemen 8 ersetzen herkömmliche Gummikeilriemen und haben darüber hinaus den Vorteil deutlich höherer Haltbarkeit. Die Riemen können repariert werden und lassen sich leicht auf Lager halten, wobei die Riemen auf Rollen verfügbar sind und erst vor dem Gebrauch auf entsprechende Länge abgelenkt und zusammengefügt werden.

Ein besonderer Vorteil der Lamellenkeilriemen 8, den die vorliegende Erfindung sich zu eigen macht, besteht darin, dass die Riemen in begrenztem Maß kurvengängig sind, d.h. der Riemen lässt sich aus seiner Längstransportrichtung seitlich auslenken, ohne dass es zu den von Seitenbogenketten bekannten Verschleiß kommt. Besondere Seitenführungen, wie sie ebenfalls bei Seitenbogenketten bekannt sind, brauchen bei dem Lamellenkeilriemen nicht vorgesehen werden, so dass zwei voneinander beabstandete, nebeneinanderliegende Keilriemenscheiben 11 und 12 auch dann problemlos von einem Lamellenkeilriemen 8 getrieben werden können, wenn diese Keilriemenscheiben 11 und 12 nicht in ein und derselben Ebene angeordnet sind.

So ist wie in Figur 1 dargestellt, ist jeweils eine Keilriemenscheibe 11 bzw. 12 einer konischen Rolle 3 mit einer benachbarten Keilriemenscheibe 12 bzw. 11 mittels des Lamellenkeilriemens 8 verbunden, obgleich die Keilriemenscheiben 11 und 12 jeweils zueinander geneigt sind, was sich aus der vorstehend beschriebenen Lagerung der konischen Rollen 3 ergibt.

Mit der Verwendung des Lamellenkeilriemens 8 als Antrieb für eine Palettenkurvenbahn wird ein Antriebssystem geschaffen, das äußerst robust und verschleißarm und wartungsfrei ist und das darüber hinaus den Vorteil geringster Geräuschentwicklung aufweist. Im Störungsfall lassen sich einzelne Lamellenkeilriemen 8 leicht auswechseln und reparieren, auf Seitenführungen sowie separate Spannstationen kann komplett verzichtet werden.

Wie aus Figur 1 ersichtlich, ist der Antrieb der Rollenbahnkurve R vorzugsweise in deren Mitte vorgesehen und besteht aus einem unterhalb der konischen Rollen in diesem Bereich angeordneten Motor 13. Über Keilriemenscheiben 14 auf der Motorwelle werden jeweils die benachbarten beidseitig des Motors 13 angeordneten Keilriemenscheiben 11 bzw. 12 der Rollenbahnkurvenabschnitte angetrieben. Von der jeweils ersten Keilriemenscheibe 11 bzw. 12 der konischen Rollen 3 wird das Antriebsmoment über Lamellenkeilriemen 8 von Rolle zu Rolle weitergeleitet, wobei jeweils ein Lamellenkeilriemen 8 zwei Rollen 3 miteinander verknüpft.

## Patentansprüche

1. Rollenbahnkurve in einem Palettenförderer mit im Abstand voneinander verlaufenden Seitenwangen und zwischen diesen in Förderrichtung aufeinanderfolgend angeordneten, beidendig in den Seitenwangen gelagerten und über Zugmittel endlos antriebsmäßig verbunden konischen Rollen, deren Achsen den Radienmittelpunkt der Rollenbahnkurve schneiden und die derartig geneigt eingebaut sind, dass ihre nach oben gerichtete Rollenmantellinie eine gemeinsame Tragebene für die Palette bilden,
**dadurch gekennzeichnet,**
**dass** die Zugmittel (9) als flexibel anpassbare, aus der Umlenkebene auslenkbare Lamellenkeilriemen (8) mit aus einzelnen Verbindungsgliedern (9) zu einem endlosen Antriebsriemen zusammenfügbaren Keilriemenabschnitten ausgebildet sind und jeweils ein kurvengängiger Lamellenkeilriemen (8) die konzentrisch auf jeder Rolle (3) angeordneten Riemenscheiben (11, 12) zweier benachbarter konische Rollen (3) unmittelbar verbindet, wobei die Seitenführung des Lamellenkeilriemens ausschließlich auf den Riemenscheiben erfolgt und die Lamellenkeilriemen im vorgespannten Zustand aufgelegt sind.

2. Rollenbahnkurve nach Anspruch 1,
**dadurch gekennzeichnet,**
**dass** die Riemenscheiben (11) jeweils an den der äußeren Seitenwange (2) zugewandten Rollenenden angeordnet sind.

3. Rollenbahnkurve nach einem der Ansprüche 1 und 2,
**dadurch gekennzeichnet,**
**dass** mindestens eine der Riemenscheiben (11, 12) einer konischen Rolle (3) mit dem Antriebsmotor (13) verbunden ist.

4. Rollenbahnkurve nach einem der Ansprüche 1 bis 3,
**dadurch gekennzeichnet,**
**dass** die mittlere Rolle (3) oder die mittleren Rollen (3) der Rollenbahnkurve (R) mit dem Antriebsmotor (13) verbunden ist bzw. sind.

## Claims

1. A curved roller-path section in a pallet conveyor, having spaced-apart side elements and conical rollers which are arranged one after the other in the conveying direction between said side elements, are mounted at both ends in the side elements, are endlessly drive-connected via traction means, have their axes intersecting the radial centre point of the curved roller-path section, and are installed in an inclined manner such that their upwardly directed surface lines form a common supporting plane for the pallet, **characterized in that** the traction means (9) are designed as flexibly adaptable lamellar V-belts (8) which can be deflected out of the deflection plane and have V-belt portions which can be joined together from individual connecting links (9) to form an endless drive belt, and in each case one curve-negotiating lamellar V-belt (8) connects the belt pulleys (11, 12) of two adjacent conical rollers (3) directly, the belt pulleys being arranged concentrically on each roller (3), it being the case that the lateral guidance of the lamellar V-belt takes place exclusively on the belt pulleys and the lamellar V-belts are placed in position in the pre-tensioned state.

2. Curved roller-path section according to Claim 1, **characterized in that** the belt pulleys (11) are arranged in each case at the roller ends which are directed towards the outer side element (2).

3. Curved roller-path section according to either of Claims 1 and 2, **characterized in that** at least one of the belt pulleys (11, 12) of a conical roller (3) is connected to the drive motor (13).

4. Curved roller-path section according to one of Claims 1 to 3, **characterized in that** the central roller (3) or the central rollers (3) of the curved roller-path section (R) is or are connected to the drive motor (13).

## Revendications

1. Tronçon courbe à rouleaux d'un transporteur pour palettes, comportant des joues latérales s'étendant à distance entre elles et des rouleaux coniques disposés les uns à la suite des autres dans la direction de transport entre celles-ci, montés aux deux extrémités dans les joues latérales et reliés en entraînement sans fin par l'intermédiaire de moyens de traction, rouleaux dont les axes coupent le centre des rayons du tronçon courbe à rouleaux et qui sont installés en étant inclinés de telle sorte que leurs génératrices de rouleaux, dirigées vers le haut, forment un plan porteur commun pour la palette,
**caractérisé en ce que** les moyens (9) de traction sont réalisés sous forme de courroies (8) trapézoïdales à lamelles, adaptables de manière flexible et pouvant être déviées hors du plan de renvoi, comportant des tronçons de courroie trapézoïdale pouvant être assemblés en une courroie d'entraînement sans fin à partir d'éléments (9) individuels de liaison, et une courroie (8) trapézoïdale à lamelles respective, de bonne tenue en courbe, relie directement les poulies (11, 12) de courroie, disposées concentriquement sur chaque rouleau (3), de deux rouleaux (3) coniques voisins, le guidage latéral de la courroie trapézoïdale à lamelles s'effectuant exclusivement sur les poulies de courroie et les courroies trapézoïdales à lamelles étant posées précontraintes.

2. Tronçon courbe à rouleaux suivant la revendication 1, **caractérisé en ce que** les poulies (11) de courroie sont respectivement disposées aux extrémités des rouleaux qui sont tournées vers la joue (2) latérale extérieure.

3. Tronçon courbe à rouleaux suivant l'une des revendications 1 et 2, **caractérisé en ce qu'**au moins une des poulies (11, 12) de courroie d'un rouleau (3) conique est reliée au moteur (13) d'entraînement.

4. Tronçon courbe à rouleaux suivant l'une des revendications 1 à 3, **caractérisé en ce que** le rouleau (3) médian ou les rouleaux (3) médians du tronçon (R) courbe à rouleaux est ou sont relié(s) au moteur (13) d'entraînement.
